# EUROPÄISCHE PATENTSCHRIFT

(11) **EP 0 830 567 B1**
(45) Veröffentlichungstag und Bekanntmachung des Hinweises auf die Patenterteilung: **02.08.2000**
(21) Anmeldenummer: 96917461.4
(22) Anmeldetag: 29.05.1996
(51) Int. Cl.: G01C 17/04, G01C 17/38

(54) **KOMPASS MIT EINER NEIGUNGSKOMPENSIERENDEN ANZEIGEEINRICHTUNG**
COMPASS HAVING A TILT-COMPENSATING INDICATOR DEVICE
BOUSSOLE AVEC DISPOSITIF INDICATEUR A COMPENSATION D'INCLINAISON

(30) Priorität: 07.06.1995 CH 166195; 16.08.1995 DE 19529976
(43) Veröffentlichungstag der Anmeldung: 25.03.1998
(73) Patentinhaber: RECTA AG, 2501 Biel (CH)
(72) Erfinder: GLOOR, Hans, CH-2504 Bienne (CH); GIGON, Denis, CH-2502 Bienne (CH)
(74) Vertreter: Leitner, Waldemar, Dr. techn.
(86) Internationale Anmeldenummer: EP9602303
(87) Internationale Veröffentlichungsnummer: WO9641127

(56) Entgegenhaltungen:
- WO-A-85/03347
- CH-A- 663 091
- CH-A- 683 373
- US-A- 4 175 333
- US-A- 4 357 756

## Beschreibung

Die Erfindung betrifft einen Kompass mit einer neigungskompensierenden Anzeigeeinrichtung, der eine auf einem Spitzenlager gelagerte Magnetfelddetektionseinrichtung aufweist, die in einem Gehäuse des Kompasses untergebracht ist.

Eine derartige neigungskompensierende Anzeigeeinrichtung ist aus der CH 683 373 der Anmelderin bekannt. Diese in der Praxis bewährte und im Handel eingeführte neigungskompensierende Anzeigeeinrichtung sieht vor, daß diese von der Magnetfelddetektionseinrichtung getrennt gelagert ist und durch einen Mitnehmer mit dieser verbunden ist. So wird erreicht, daß die bei einem üblichen mechanischen Kompaß, bei dem die Anzeigeeinrichtung direkt mit der Magnetfelddetektionseinrichtung starr verbunden ist oder mit dieser identisch ist, auftretenden Nachteile, daß schon bei einer relativ kleinen Neigung (8°-12°) des Kompasses eine Anzeigenadel oder eine Anzeigescheibe der Anzeigeeinrichtung den Deckel oder den Boden des Gehäuses berührt, vermieden wird. Dieser störende Effekt kann auch bei einer Anwendung des Kompasses in verschiedenen Breitengraden durch eine unterschiedliche Inklination des Magnetfeldes der Erde entstehen.

Hierdurch ist der Kompaß nicht mehr funktionstüchtig. Er muß daher vor dem Ablesen in eine Lage gebracht werden, in der die Anzeigeeinrichtung frei schwingen kann. Bei vielen Anwendungen, wie z.B. bei Orientierungsläufen, ist es aber von großer Wichtigkeit, daß die Anzeige möglichst rasch, d.h. ohne eine verzögernde Neuorientierung des Kompasses, und genau abgelesen werden kann. Außerdem kann ein Neigen des Kompasses in nachteiliger Art und Weise zu Peilfehlern führen.

Die bekannte neigungskompensierende Anzeigeeinrichtung für einen Kompaß ist in der Lage, die o.g. störenden Effekte zu eliminieren oder zumindest zu reduzieren. Sie besitzt jedoch den Nachteil, daß hierfür ein hoher Aufwand für das Lager der Anzeigeeinrichtung, welches außerdem genau in axialer Richtung ausgerichtet sein muß, erforderlich ist. Außerdem ist das axiale Ausrichten des Lagers der Anzeigeeinrichtung mit dem Lager der Magnetfelddetektionseinrichtung aufwendig.

Aus der US-PS 2 446 258 ist ein insbesondere für Flugzeuge konzipierter Kompaß bekannt, der ein Kompaßgehäuse aufweist, in dem um eine gehäusefeste vertikale Achse eine Anzeigeeinrichtung in einer zu dieser vertikalen Achse senkrechten Ebene drehbar ist. Die Anzeigeeinrichtung weist in einen fest mit ihr verbundenen, sich parallel zur vorgenannten vertikalen Achse erstreckenden Rahmen auf, in dem über Lagerelemente entlang einer durch diese Lagerelemente festgelegten horizontalen Achse eine als Magnetfelddetektionseinrichtung fungierende magnetische Nadel drehbar gelagert ist. Durch die Lagerung der magnetischen Nadel im Rahmen wird erreicht, daß diese parallel zum Magnetfeld der Erde bleibt.

Es ist daher Aufgabe der Erfindung, eine neigungskompensierende Anzeigeeinrichtung der eingangs genannten Art derart weiterzubilden, daß auch bei einer größeren Neigung des Gehäuses des Kompasses und bei unterschiedlichen Inklinationen des Erdmagnetfeldes eine hinreichend gute Anzeige gewährleistet ist, wobei aber die erfindungsgemäße neigungskompensierende Anzeigeeinrichtung besonders einfach aufgebaut sein soll.

Diese Aufgabe wird erfindungsgemäß durch die Merkmale des Anspruchs 1 gelöst.

Durch die erfindungsgemäßen Maßnahmen wird in besonders vorteilhafter Art und Weise eine neigungskompensierende Anzeigeeinrichtung für einen Kompaß geschaffen, die sich in einem labilen Gleichgewicht befindet und sich um die Lagerachse in einer zur West-Ost-Richtung der Magnetfelddetektionseinrichtung orthogonalen Ebene drehen kann. Diese erfindungsgemäß vorgesehene Drehbarkeit der Anzeigeeinrichtung bewirkt, daß diese einer Neigung der Magnetfelddetektionseinrichtung oder des Gehäuses des Kompasses in der Nord-Süd-Richtung der entsprechenden Bewegung nicht folgt, sondern vielmehr ihr Lage im wesentlichen beibehält, so daß in vorteilhafter Art und Weise verhindert wird, daß die erfindungsgemäße Anzeigeeinrichtung an den Deckel oder den Boden des Kompaßgehäuses anstößt. Da bei einer Neigung des Kompaßgehäuses in der Ost-West-Richtung die Anzeigeeinrichtung keine Bewegung um die Kompaßachse ausführt, ist es nicht erforderlich, die Anzeigeeinrichtung von der Neigungsbewegung der Magnetfelddetektionseinrichtung zu entkoppeln. Somit ist durch die erfindungsgemäßen Maßnahmen in besonders einfacher Art und Weise ein störungsfreier Betrieb eines mit der erfindungsgemäßen neigungskompensierenden Anzeigeeinrichtung ausgerüsteten Kompasses über den gesamten Winkelbereich möglich.

Eine vorteilhafte Weiterbildung der Erfindung sieht vor, daß die vorzugsweise als Anzeigenadel oder als Anzeigescheibe ausgebildete Anzeigeeinrichtung einen oder mehrere zum Deckel und/oder zum Boden des Gehäuses hin gerichtete Abstandskörper aufweist. Durch diese erfindungsgemäße Maßnahme wird in vorteilhafter Art und Weise erreicht, daß die Neigung der Anzeigeeinrichtung begrenzt wird, da diese Abstandskörper ab einer bestimmten Schräglage des Gehäuses den Deckel und/oder den Boden berühren. Die hierbei zwischen den Abstandskörpern und dem Deckel bzw. dem Boden des Gehäuses entstehende Reibung ist aber derart gering, daß sie die Anzeigegenauigkeit des Kompasses nicht beeinträchtigt.

Eine weitere vorteilhafte Weiterbildung der Erfindung sieht vor, daß die Anzeigeelemente der Anzeigeeinrichtung über ringförmige Verbindungselemente mit der Lagerachse verbunden sind, wobei diese Verbindungselemente derart ausgebildet sind, daß bei einer Neigung des Permanentmagnetsystems der Magnetfelddetektonseinrichtung dieses System durch einen von der Lagerachse und den ringförmigen Verbindungselementen begrenzten Zwischenraum hindurchtreten kann. Eine derartige Maßnahme besitzt den Vorteil, daß auch bei einem sehr kleinen Abstand zwischen der Magnetfelddetektionseinrichtung und der Anzeigeeinrichtung deren Bewegung nicht durch das Permanentmagnetsystem der Magnetfelddetektionseinrichtung behindert werden kann.

Eine weitere vorteilhafte Weiterbildung der Erfindung sieht vor, daß bei einer als Anzeigescheibe ausgebildeten Anzeigeeinrichtung diese gegen außen mindestens in der Ost-West-Richtung des Permanentsystems und vorzugsweise auch in der Nord-Süd-Richtung, gegen den Boden hin leicht gebogen ist. Eine derartige Maßnahme besitzt den Vorteil, daß dadurch eine größere Schrägstellung der Anzeigescheibe gegenüber dem Gehäuse möglich ist, ohne daß diese dabei am Deckel oder am Boden des Kompaßgehäuses anstößt.

Weitere vorteilhafte Weiterbildungen der Erfindung sind Gegenstand der weiteren abhängigen Ansprüche.

Weitere Einzelheiten und Vorteile der Erfindung sind dem Ausführungsbeispiel zu entnehmen, das im folgenden anhand der Figuren beschrieben wird. Es zeigen:
- Figur 1: eine Draufsicht auf ein Ausführungsbeispiel einer Anzeigeeinrichtung,
und
- Figur 2: einen Schnitt durch einen die Anzeigeeinrichtung der Figur 1 verwendenden Kompaß entsprechend eines Schnittes entlang der Linie A-A der Figur 1

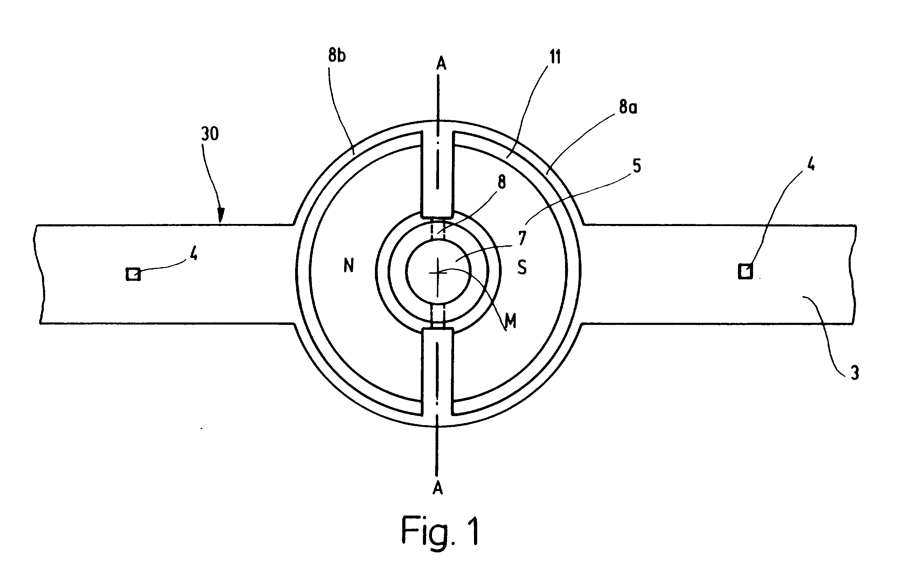

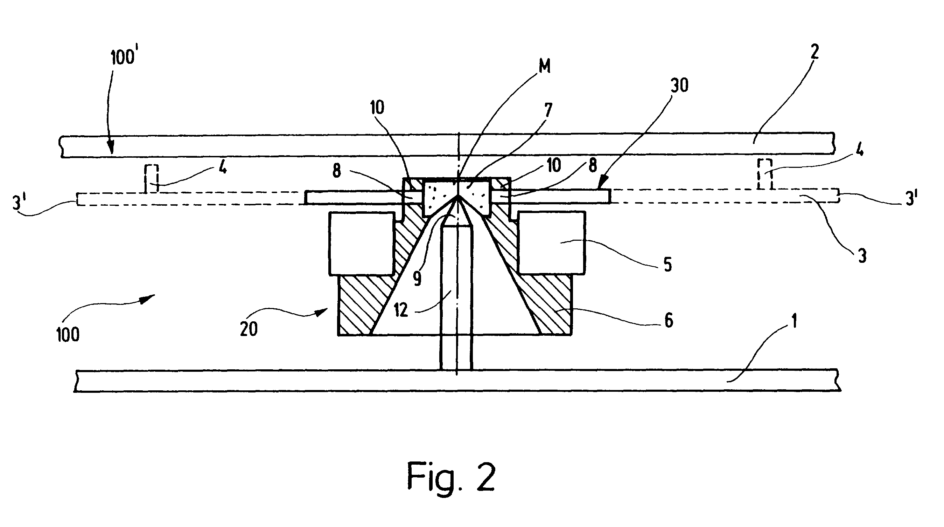

Das in den Figuren 1 und 2 dargestellte Ausführungsbeispiel einer neigungskompensierten Anzeigeeinrichtung 30 für einen Kompaß 100 ist in einem Kompaßgehäuse 100' aufgenommen, von dem in Figur 2 nur ein durchsichtiger Deckel 2 und ein vorzugsweise ebenfalls durchsichtig ausgebildeter Boden 1 dargestellt ist. In dem durch den Boden 1 und den Deckel 2 begrenzten Kompaßgehäuse 100' ist vorzugsweise eine Flüssigkeit oder ein Gas vorhanden, die vor allem zur Dämpfung der Bewegung des Anzeigesystems 30 dienen. Auf einem auf dem Boden 1 befestigten Schaft 12 ist über ein auf dessen Spitze 9 aufsetzendes Spitzenlager 7 eine allgemein mit 20 bezeichnete Magnetfelddetektionseinrichtung angeordnet, die im wesentlichen aus dem auf der Spitze 9 des Schaftes 12 gelagerten Spitzenlager 7, das vorzugsweise aus einem synthetischen Rubin hergestellt ist, einen mit dem Spitzenlager 7 fest verbundenen Magnetträger 6 und einem Permanentmagneten 5, der vorzugsweise zylindrische Form aufweist, besteht. Das Spitzenlager 7 bildet hierbei zusammen mit der Spitze 9 des Schaftes 12 ein Kompaßlager aus, das sehr wenig Reibung aufweist und dem Magnetträger 6 eine große Auslenkung erlaubt, ohne mit einem anderen Teil des Kompasses 100 in Kontakt zu kommen.

Um nun zu verhindern, daß eine Neigungsbewegung der Magnetfelddetektionseinrichtung 20 in Nord-Süd-Richtung auf die Anzeigeeinrichtung 30 übertragen wird, sind im Magnetträger 6 zwei als Lagerelemente fungierende Bohrungen 10 vorgesehen, die ungefähr in der Ebene des Rotationspunktes des Spitzenlagers 7 um die Spitze 9 angeordnet sind. In den Bohrungen 10 ist eine ein Lagerelement ausbildende Lagerachse 8 der Anzeigeeinrichtung 30 drehbar aufgenommen, wobei die Lagerachse 8 im wesentlichen senkrecht zur Nord-Süd-Richtung der Magnetfelddetektionseinrichtung 20 angeordnet ist. Die entweder als durchgehende Achse oder als zwei radiale Teilachsen ausgebildete Lagerachse 8 der Anzeigeeinrichtung 30 ist über ringförmige Verbindungselemente 8a, 8b mit zwei Zeigern 3 verbunden, welche die eigentliche Anzeigefunktion der Anzeigeeinrichtung 30 ausführen.

Wird nun das Kompaßgehäuse 100' des Kompasses 100 in der Nord-Süd-Richtung des Magnetfelddetektionssystems 20 geneigt, stellt sich der Permanentmagnet 5 schräg zur Spitze 9 des mit dem Boden 1 des Kompaßgehäuses 100' verbundenen Schaftes 12. Aufgrund der beweglichen Lagerung der Anzeigeeinrichtung 30 in den als Lagerstellen fungierenden Bohrungen 10 des Magnetträgers 6 der Magnetfelddetektionseinrichtung 20 ist in diesem Fall in vorteilhafter Art und Weise keine Zwangskopplung der Bewegung der Magnetfelddetektionseinrichtung 20 und der Anzeigeeinrichtung 30 gegeben, so daß diese nicht von der durch die Neigung des Gehäuses 100' in der Nord-Süd-Richtung der der Inklination des Erdmagnetfeldes ausgelösten Bewegung der Magnetfelddetektionseinrichtung 20 folgt. Da - wie bereits eingangs erwähnt wurde - bei einer Neigung des Gehäuses in der West-Ost-Richtung der Magnetfelddetektionseinrichtung 20 kein Drehmoment auf die Anzeigeeinrichtung 30 einwirkt und diese somit immer in die Nord-Süd-Richtung zeigt, ist keine Entkoppelung der beiden Einrichtungen 20. 30 zwingend erforderlich. Somit wird durch die oben beschriebene Lagerung der Anzeigeeinrichtung 30 über die im wesentlichen senkrecht zur Nord-Süd-Richtung der Magnetfelddetektionseinrichtung 20 angeordneten Lagerachse 8 in besonders einfacher Art und Weise eine weitgehend störungsfreie Beweglichkeit der Anzeigeeinrichtung 30 über den vollen Winkelbereich gewährleistet.

Hierbei ist außerdem von Vorteil, daß bei einer Neigung der Magnetfelddetektionseinrichtung 20 deren Permanentmagnet 5 durch den von den ringförmigen Verbindungselementen 8a, 8b und der Lagerachse 8 begrenzten Zwischenraum hindurchtreten kann, so daß es in vorteilhafter Art und Weise möglich ist, nur einen geringen Abstand zwischen der Anzeigeeinrichtung 30 und der Magnetfelddetektionseinrichtung 20 vorzusehen. Eine derartige Anordnung besitzt den Vorteil, daß ein derartiger Kompaß 100 besonders kompakt baut, weshalb er in vorteilhafter Art und Weise in einem flachen Kompaßgehäuse 100' verwendet werden kann.

Wenn genügend Platz zur Ausbildung des Kompasses 100 zur Verfügung steht, und es deshalb nicht erforderlich ist, daß die Anzeigeeinrichtung 30 und die Magnetfelddetektionseinrichtung 20 eng beabstandet zueinander angeordnet sind, so ist es natürlich möglich, die durch die ringförmigen Verbindungselemente 8a, 8b festgelegte Ringscheibe auch als Vollscheibe auszubilden, welche kostengünstiger herstellbar ist als die weiter oben beschriebene Konstruktion.

Um zu verhindern, daß die Zeiger 3 der Anzeigeeinrichtung 30 bei einer größeren Neigung des Gehäuses 20 oder bei einem sehr flach bauenden Gehäuse 100' des Kompasses 100 an dem Boden 1 oder dem Deckel 2 des Gehäuses 100' anstoßen, kann in vorteilhafter Art und Weise noch vorgesehen sein, daß auf den Zeigern 3 der Anzeigeeinrichtung 30 ein oder mehrere Abstandselemente 4 angeordnet sind, welche - wie am besten aus Figur 2 ersichtlich ist - vorzugsweise spitzenartig ausgebildet sind. Diese Abstandskörper 4 sind vorzugsweise symmetrisch auf den Zeigern 3 angeordnet, wobei eine vom Mittelpunkt M der Anzeigeeinrichtung 30 entfernte Anordnung der Abstandskörper 4 bevorzugt wird. Diese vorzugsweise nach einem Formätzen oder -stanzen aus den Zeigern 3 gebogenen Abstandskörper 4 verhindern, daß die Spitzen 3' der Zeiger 3 bei einer zu großen Neigung des Kompaßgehäuses 100' am Deckel 2 und/oder am Boden 1 des Kompaßgehäuses 100' anstoßen können, da diese spitzenartig ausgebildeten Abstandskörper 4 in diesem Fall am Deckel 2 und/oder am Boden 1 ansetzen und die Neigungsbewegung der Anzeigeeinrichtung 30 derart limitieren. Hierbei tritt zwar eine die Bewegung der Anzeigeeinrichtung 30 störende Reibung zwischen den Abstandskörpern 4 und dem Deckel 2 und/oder dem Boden 1 auf, jedoch ist diese derart gering, daß hierdurch die Beweglichkeit der Anzeigeeinrichtung 30 und somit die Anzeigegenauigkeit des Kompasses 100 nicht beeinflußt werden.

Abschließend zu o.g. Ausführungsbeispiel ist noch anzuführen, daß es für eine Reihe von Anwendungszwecken vorteilhaft sein kann, wenn die Zeiger 3 in der Ost-West-Richtung der Magnetfelddetektionseinrichtung 20 gegen den Boden 1 hin leicht gebogen ausgeführt sind, so daß eine größere Schrägstellung der Zeiger 3 gegenüber dem Kompaßgehäuse 100 möglich ist.

Die in den Figuren 1 und 2 gezeigte Ausgestaltung der Anzeigeeinrichtung 30 mit zwei Zeigern 3 ist nicht die einzig mögliche. Vielmehr sind eine Reihe von unterschiedlichen Gestaltungsmöglichkeiten für die Anzeigeeinrichtung 30 denkbar. Beispielhafterweise sollte hier noch angeführt werden, daß anstelle der Zeiger 3 auch eine Anzeigescheibe eingesetzt werden kann, welche im wesentlichen die gleiche Fläche besitzt wie der Deckel 2 des Kompaßgehäuses 100'. In diesem Fall ist es dann von Vorteil, wenn die Anzeigescheibe in radialer Richtung gesehen nach außen gegen den Boden hin leicht gebogen ist, um eine größere Schrägstellung der Anzeigescheibe gegenüber dem Kompaßgehäuse 100' zu ermöglichen. Die auf den Zeigern 3 oder der Anzeigescheibe der Anzeigeeinrichtung 30 angeordneten Abstandskörper 4 können durch umlaufende Erhebungen, die auch unterbrochen ausgeführt sein können, des Deckels 2 oder des Bodens 1 des Kompaßgehäuses 100' ersetzt werden.

Es bedarf an und für sich keiner Erwähnung, daß das vorstehend als Lagerachse 8 ausgebildete Lagerelement der Anzeigeeinrichtung 30 auch als Kipplager (Messerlager) ausgebildet sein kann. In diesem Fall wird dann anstelle der Bohrungen 10 eine V-förmige Aufnahme verwendet.

## Patentansprüche

1. Kompaß mit einem zumindest teilweise durchsichtigen Gehäuse, der eine in dem Gehäuse (100') des Kompasses (100) untergebrachte Magnetfelddetektionseinrichtung (20) aufweist, die über ein Spitzenlager (7) auf einer Spitze (9) eines Schaftes (12), der im wesentlichen senkrecht zu einem Boden (1) des Gehäuses (100') angeordnet ist, gelagert ist, und die zumindest in einer zur Richtung des Schaftes (12) senkrechten Ebene drehbar gelagert ist, wobei die Anzeigeeinrichtung eine nicht-starre Verbindung hinsichtlich der Bewegung der Magnetfelddetektionseinrichtung (20) in dieser Ebene aufweist, dadurch gekennzeichnet, daß die nicht-starre Verbindung zwischen der Anzeigeeinrichtung (30) und der Magnetfelddetektionseinrichtung (20) mittels Lagerelemente (8,10) erfolgt, wobei das in der Magnetfelddetektionseinrichtung (20) angeordnete und mit dem in der Anzeigeeinrichtung (30) angeordneten Lagerelement (8) zusammenwirkende Lagerelement (10) rechtwinkelig zur Nord-Süd-Magnetisierung der Magnetfelddetektionseinrichtung (20) verläuft.

2. Kompaß nach Anspruch 1, dadurch gekennzeichnet, daß die Magnetfelddetektionseinrichtung (20) einen Magnetträger (6) aufweist, in dem das Lagerelement (10) zur Aufnahme des vorzugsweise als Lagerachse (8) oder als Kipplager ausgebildeten Lagerelements der Anzeigeeinrichtung (30) vorgesehen ist.

3. Kompaß nach Anspruch 2, dadurch gekennzeichnet, daß das die Lagerachse (8) oder das Kipplager aufnehmende Lagerelement der Magnetfelddetektionseinrichtung (20) als Bohrungen (10) oder als V-förmige Aufnahmen ausgebildet ist.

4. Kompaß nach einem der Ansprüche 1 bis 3, dadurch gekennzeichnet, daß die Anzeigeeinrichtung (30) zwei diametral angeordnete und mit dem Lagerelement (8) verbundene Zeiger (3) aufweist.

5. Kompaß nach Anspruch 4, dadurch gekennzeichnet, daß die Zeiger (3) der Anzeigeeinrichtung (30) über ringförmige Verbindungselemente (8a, 8b) mit dem Lagerelement (8) der Anzeigeeinrichtung (30) verbunden sind.

6. Kompaß nach einem der vorangehenden Ansprüche, dadurch gekennzeichnet, daß die Anzeigeeinrichtung (30) mindestens einen zum Deckel (2) oder zum Boden (1) des Kompaßgehäuses (100') hin gerichteten Abstandskörper (4) aufweist.

7. Kompaß nach Anspruch 6, dadurch gekennzeichnet, daß die Lagerachse (8) der Anzeigeeinrichtung (30) entweder als durchgehende Achse oder als aus zwei radialen Teilachsen bestehend ausgebildet ist.

8. Kompaß nach einem der Ansprüche 1 bis 7, dadurch gekennzeichnet, daß die Anzeigeeinrichtung (30) als Anzeigescheibe ausgebildet ist.

9. Kompaß nach Anspruch 8, dadurch gekennzeichnet, daß die Anzeigescheibe mindestens einen Abstandskörper (4) aufweist und daß der Abstandskörper (4) der Anzeigeeinrichtung (30) als eine umlaufende Erhebung der Anzeigescheibe ausgebildet ist.

10. Kompaß nach einem der Ansprüche 8 bis 9, dadurch gekennzeichnet, daß die Anzeigescheibe in radialer Richtung nach außen zum Boden (1) des Kompaßgehäuses (100') hin abfällt.

11. Kompaß nach Anspruch 1, dadurch gekennzeichnet, daß die Magnetfelddetektionseinrichtung (20) einen Magnetträger (6) aufweist, der auf einem Spitzenlager (7) gelagert ist, und der einen Permanentmagneten (5) trägt.

12. Kompaß nach Anspruch 11, dadurch gekennzeichnet, daß der Magnetträger (6) in der Ebene des Spitzenlagers (7) ein Lagerelement (10) für das Lagerelement (8) der Anzeigeeinrichtung (30) aufweist.

## Claims

1. A compass with an at least partially transparent housing, possessing a magnetic field detection means (20) accommodated in said housing (100') of said compass (100), said detection means (20) being mounted via a pivot bearing (7) on a tip (9) of a shaft (12), which is arranged generally perpendicular to a bottom (1 ) of said housing (100'), and which is mounted rotatingly in at least a plane perpendicular to the direction of the shaft (12), with an indicator device having a non-rigid connection in respect to the movement of the magnetic field detection means (20) in this plane, characterized in that the non-rigid connection between the indicator device (30) and the magnetic field detection means (20) is achieved via bearing elements (8, 10), with the bearing element (10) arranged in the magnetic field detection means (20) and interacting with the bearing element (8) arranged in the indicator device (30) is orientated right-angled to the North-South magnetization of said magnetic field detection means (20).

2. The compass according to claim 1, characterized in that the magnetic field detection means (20) comprises a magnet carrier (6), in which said bearing element (10) is provided to receive the bearing element ,preferentially having the form of a bearing axis (8) or of a tilting bearing, of the indicator device (30).

3. The compass according to claim 2, characterized in that the bearing element of the magnetic field detection means (20) receiving the bearing axis (8) or the tilting bearing has the form of holes (10) or of V-shaped mounts.

4. The compass according to one of the claims 1 to 3, characterized in that the indicator device (30) comprises two diametrically arranged pointers (3) which are connected with the bearing element (8).

5. The compass according to claim 4, characterized in that the pointers (3) of the indicator device (30) are connected with the bearing element (8) of the indicator device (30) via annular connection elements (8a, 8b).

6. The compass according to one of the previous claims, characterized in that the indicator device (30) comprises at least one spacer element (4) directed to the lid (2) or to the bottom (1 ) of the compass housing (100').

7. The compass according to claim 6 characterized in that the bearing axis (8) of the indicator device (30) is formed either as a continuous axis or is formed by two radial partial axis.

8. The compass according to one of the claims 1 to 7, characterized in that the indicator device (30) is formed as an indicator disc.

9. The compass according to claim 8, characterized in that the indicator disc comprises at least one spacer element (4), and that the spacer element (4) of the indicator device (30) is formed as an annular elevation on said indicator disc.

10. The compass according to one of the claims 8 or 9, characterized in that the indicator disc drops in radially outward direction to the bottom (1 ) of said compass housing (100').

11. The compass according to claim 1, characterized in that the magnetic field detection means (20) comprises a magnet carrier (6), which is mounted on a pivot bearing (7) and which carries a permanent magnet (5).

12. The compass according to claim 11, characterized in that the magnet carrier (6) comprises in the plane of the pivot bearing (7) a bearing element (10) for a bearing element (8) of the indicator device (30).

## Revendications

1. Boussole avec un boîtier au moins partiellement transparent, qui présente un dispositif de détection de champ magnétique (20) logé dans le boîtier (100') de la boussole (100), lequel est logé au moyen d'un support d'extrémités (7) sur une pointe (9) d'une tige (12), laquelle est disposée sensiblement perpendiculairement à un fond (1) du boîtier (100'), et qui est logée de façon à pouvoir pivoter au moins dans un plan perpendiculaire à la direction de la tige (12), le dispositif indicateur présentant une liaison non fixe en ce qui concerne le déplacement du dispositif de détection de champ magnétique (20) dans ce plan, caractérisée en ce que la liaison non fixe entre le dispositif indicateur (30) et le dispositif de détection de champ magnétique (20) s'effectue au moyen d'éléments de support (8, 10), l'élément de support (10) disposé dans le dispositif de détection de champ magnétique (20) et agissant conjointement avec l'élément de support (8) disposé dans le dispositif indicateur (30) étant perpendiculaire à la magnétisation nord-sud du dispositif de detection de champ magnétique (20) .

2. Boussole selon la revendication 1, caractérisée en ce que le dispositif de détection de champ magnétique (20) présente un support d'aimant (6), dans lequel l'élément de support (10) est prévu pour le logement de l'élément de support du dispositif indicateur (30) qui est conçu de préférence comme axe de support (8) ou comme support basculant.

3. Boussole selon la revendication 2, caractérisée en ce que l'élément de support du dispositif de détection de champ magnétique (20), qui loge l'axe de support (8) ou le support basculant, est conçu comme des perçages (10) ou des logements en forme de V.

4. Boussole selon l'une quelconque des revendications 1 à 3, caractérisée en ce que le dispositif indicateur (30) présente deux aiguilles (3) disposées de façon diamétralement opposée et reliées à l'élément de support (8).

5. Boussole selon la revendication 4, caractérisée en ce que les aiguilles (3) du dispositif indicateur (30) sont reliées par des éléments de liaison (8a, 8b) de forme annulaire à l'élément de support (8) du dispositif indicateur (30).

6. Boussole selon l'une quelconque des revendications précédentes, caractérisée en ce que le dispositif indicateur (30) présente au moins un corps d'espacement (4) dirigé vers le couvercle (2) ou vers le fond (1) du boîtier de boussole (100').

7. Boussole selon la revendication 6, caractérisée en ce que l'axe support (8) du dispositif indicateur (30) est conçu comme axe continu ou comme axe composé de deux axes partiels radiaux.

8. Boussole selon l'une quelconque des revendications 1 à 7, caractérisée en ce que le dispositif indicateur (30) est conçu comme un disque indicateur.

9. Boussole selon la revendication 8, caractérisée en ce que le disque indicateur présente au moins un corps d'espacement (4) et le corps d'espacement (4) du dispositif indicateur (30) est conçu comme une saillie périphérique du disque indicateur.

10. Boussole selon l'une quelconque des revendications 8 et 9, caractérisée en ce que le disque indicateur descend dans le sens radial vers l'extérieur en direction du fond (1) du boîtier de boussole (100').

11. Boussole selon la revendication 1, caractérisée en ce que le dispositif de détection de champ magnétique (20) présente un support d'aimant (6) qui est logé sur un support d'extrémité (7) et supporte un aimant permanent (5).

12. Boussole selon la revendication 11, caractérisée en ce que le support d'aimant (6) présente dans le plan du support d'extrémité (7) un élément de support (10' pour l'élément de support (8) du dispositif indicateur (30).
